# EUROPEAN PATENT APPLICATION

(11) **EP 4 557 421 A2**
(43) Date of publication of application: **21.05.2025**
(21) Application number: 24212934.4
(22) Date of filing: 14.11.2024
(51) Int. Cl.: H01M 10/052, H01M 50/403, H01M 50/42, H01M 50/443, H01M 50/446, H01M 50/451, H01M 50/489

(54) **SEPARATOR AND ELECTROCHEMICAL DEVICE COMPRISING THE SAME**

(30) Priority: 15.11.2023 KR 20230157955
(71) Applicant: SK Innovation Co., Ltd., Seoul 03188 (KR); SK ie technology Co., Ltd., Jongno-gu Seoul 03188 (KR)
(72) Inventor: KWON, Tae Wook, 34124 Daejeon (KR); CHO, Kyu Young, 34124 Daejeon (KR); BAE, Heung Taek, 34124 Daejeon (KR)
(74) Representative: Prüfer & Partner mbB Patentanwälte · Rechtsanwälte

(57) **Abstract**

Embodiment of the present disclosure relate to a separator comprising a porous substrate; and an inorganic particle layer which is formed on at least one surface of the porous substrate and comprises a binder and inorganic particles, wherein the separator has a Gurley permeability of 10 to 250 sec/100 cc, a puncture strength of 0.3 N/µm or more, tensile strengths in the machine direction and in the transverse direction of 1500 kgf/cm² or more, heat shrinkage rates in the machine direction and in the transverse direction measured after being allowed to stand at 130°C for 60 minutes of 5% or less, and a saturated moisture content measured by a Karl Fischer method of 350 to 1000 ppm.

## Description

### TECHNICAL FIELD

The following disclosure relates to a separator and an electrochemical device comprising the same.

### BACKGROUND

Recently, as the demand for eco-friendly energy increases, research on electrochemical devices is in progress in various fields comprising electronic devices, such as mobile phones and PCs, and electric vehicles.

An insulating separator interposed between a positive electrode and a negative electrode is being studied in the direction of thinning for high capacity and high output characteristics of an electrochemical device, and when the separator is thinned, its mechanical strength and/or heat resistance is/are decreased. When mechanical strength and/or heat resistance is/are decreased, a safety problem during manufacturing process and use of a battery is more likely to occur. As an example, a short circuit between electrodes due to damage or deformation of the separator caused by a temperature rise in the battery may occur, resulting in an increase a risk of overheating or fire of the battery.

Therefore, development of a separator which is thin and has improved mechanical strength and heat resistance as described above is needed. In addition, development of a separator having high permeability for improving capacity and output is needed.

### SUMMARY

An embodiment of the present disclosure is directed to providing a separator having excellent heat resistance and adhesion even at a small thickness, and an electrochemical device comprising the separator.

Another embodiment of the present disclosure is directed to providing a separator having improved mechanical strength and permeability even at a small thickness, and an electrochemical device comprising the separator.

Still another embodiment of the present disclosure is directed to providing an electrochemical device having excellent resistance properties and thermal safety.

The separator of the present disclosure may be widely applied to a green technology field such as electric vehicles, battery charging stations, and other solar power generations and wind power generations using batteries. In addition, the separator of the present disclosure may be used in eco-friendly electric vehicles, hybrid vehicles, and the like for suppressing air pollution and greenhouse gas emissions to prevent climate change.

In one general aspect, a separator comprises: a porous substrate; and an inorganic particle layer which is formed on at least one surface of the porous substrate and comprises a binder and inorganic particles, wherein the separator has a Gurley permeability of 10 to 250 sec/100 cc, a puncture strength of 0.3 N/µm or more, tensile strengths in the machine direction and in the transverse direction of 1500 kgf/cm² or more, heat shrinkage rates in the machine direction and in the transverse direction measured after being allowed to stand at 130°C for 60 minutes of 5% or less, and a saturated moisture content measured by a Karl Fischer method of 350 to 1000 ppm.

In an example embodiment, the Gurley permeability may be 90 to 230 sec/100 cc, and the saturated moisture content may be 450 to 1000 ppm.

In an example embodiment, the porous substrate may have an average thickness of 5 to 15 um, and a ratio between the average thickness of the porous substrate and an average thickness of the separator may be 0.7 or more.

In an example embodiment, a total thickness of the inorganic particle layer formed on the porous substrate may be 3.2 µm or less.

In an example embodiment, the binder may comprise a polyacrylamide-based resin.

In an example embodiment, the polyacrylamide-based resin may be a copolymer comprising a unit derived from a (meth)acrylamide-based monomer and a unit derived from a comonomer.

In an example embodiment, the polyacrylamide-based resin may comprise a structural unit derived from the (meth)acrylamide-based monomer and a structural unit derived from a (meth)acryl-based monomer containing a hydroxyl group.

In an example embodiment, the polyacrylamide-based resin may have a weight average molecular weight of 100,000 to 2,000,000 g/mol.

The binder may have a glass transition temperature (Tg) to lie in a range of 0 to 200 °C, preferably 0 to 150 °C, 30 to 200 °C, 30 to 150 °C, 50 to 150 °C.

In an example embodiment, the binder may further comprise any one or two or more water-based polymer selected from the group consisting of polyvinyl alcohol, polyvinylidene fluoride, carboxymethyl cellulose, styrene butadiene rubber, polyacrylic acid, polyethylene glycol, polyacrylonitrile, polyvinylpyrrolidone, and copolymers thereof.

In an example embodiment, a content of the water-based polymer may be 0.1 to 30 wt% of the total content of the binder.

In an example embodiment, the inorganic particles may have a BET specific surface area of 3 to 7 m²/g.

In an example embodiment, the inorganic particles may have an average particle diameter (D50) of 0.5 to 1.5 um.

In an example embodiment, the inorganic particles may comprise any one or two or more selected from the group consisting of metal hydroxides, metal oxides, metal nitrides, and metal carbides.

In an example embodiment, the inorganic particle layer may have a weight ratio between the inorganic particles and the binder of 50:50 to 99.9:0.1.

In an example embodiment, the inorganic particle layer may be formed at 0.5 to 10 g/m².

In another general aspect, an electrochemical device comprises the separator described above.

Other features and aspects will be apparent from the following detailed description, the drawings, and the claims.

### BRIEF DESCRIPTION OF THE DRAWINGS

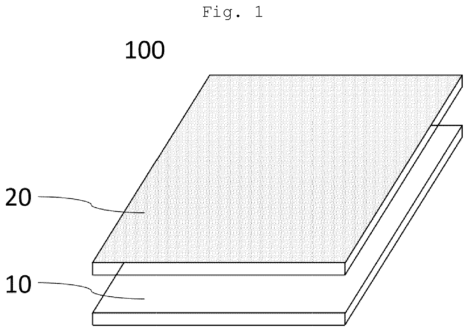

FIG.1 is a schematic structure of a separator according to one embodiment. 100: Separator; 10: Porous substrate; 20: Inorganic particle layer.

### DETAILED DESCRIPTION OF EMBODIMENTS

Hereinafter, the present disclosure will be described in detail. However, it is only illustrative and the present disclosure is not limited to the specific embodiments which are illustratively described in the present disclosure.

In addition, the singular form used in the specification and claims appended thereto may be intended to comprise a plural form also, unless otherwise indicated in the context.

In addition, the numerical range used in the present specification comprises all values within the range comprising the lower limit and the upper limit, increments logically derived in a form and span of a defined range, all double limited values, and all possible combinations of the upper limit and the lower limit in the numerical range defined in different forms. Unless otherwise defined in the present specification, values which may be outside a numerical range due to experimental error or rounding off of a value are also comprised in the defined numerical range.

Furthermore, throughout the specification, unless explicitly described to the contrary, "comprising" any constituent elements will be understood to imply further inclusion of other constituent elements rather than exclusion of other constituent elements.

In the present specification, it will be understood that when an element such as a layer, film, region, or substrate is referred to as being "on" or "above" another element, it can be directly on the other element or intervening elements may also be present.

In the present specification, "average particle diameter" refers to "D50", and "D50" refers to a particle diameter of an inorganic particle corresponding to 50% in terms of a volume-based integrated fraction. The average particle diameter may be derived from particle size distribution results obtained by collecting a sample of inorganic particles to be measured in accordance with the standard of ISO 13320-1 and performing analysis using S3500 available from MICROTRAC. In addition, "D90" refers to a particle diameter of a particle corresponding to 90% in the volume-based integrated fraction, and "D10" refers to a particle diameter of an inorganic particle corresponding to 10% in a volume-based integrated fraction. D90 and D10 may be derived in the same manner as D50.

The present disclosure provides a separator(100) comprising: a porous substrate(10); and an inorganic particle layer(20) which is formed on at least one surface of the porous substrate and comprises a binder and inorganic particles, wherein the separator has a Gurley permeability of 10 to 250 sec/100 cc, a puncture strength of 0.3 N/µm or more, tensile strengths in the machine direction and in the transverse direction of 1500 kgf/cm² or more, heat shrinkage rates in the machine direction and in the transverse direction measured after being allowed to stand at 130°C for 60 minutes of 5% or less, and a saturated moisture content measured by a Karl Fischer method of 350 to 1000 ppm.

Conventionally, when a separator is manufactured at a very small thickness, a separator satisfying all of the physical properties as described above may not be provided. However, the inventors of the present disclosure repeated the research, and as a result, confirmed that a separator which has excellent heat resistance and adhesion even at a small thickness and excellent mechanical strength and permeability by implementing the Gurley permeability, the puncture strength, the tensile strength, and the saturated moisture content in the ranges described above simultaneously may be provided.

In addition, since the electrochemical device according to an example embodiment comprises the separator satisfying the physical properties as described above simultaneously, it may have both excellent resistance properties and thermal safety. Specifically, since the electrochemical device according to an example embodiment may show significantly low discharge resistance after 600 cycles, it may have improved charge and discharge performance.

Meanwhile, when an increase rate of moisture content of the separator is high, a moisture content remaining in a battery is increased even after battery assembly, and the increase in moisture content as such may be a cause of decreasing a battery capacity by causing electrolyte decomposition. Conventionally, in order to lower the moisture content in the battery, a high-priced packaging material such as aluminum should be used. However, the separator according to the present disclosure may have a less increase rate of moisture content after storage, by satisfying the physical properties described above comprising the saturated moisture content simultaneously. Accordingly, since the present disclosure has a low moisture content remaining in the battery, a battery having excellent performance may be provided even when a packaging material of polyethylene instead of an aluminum material. That is, according to the present disclosure, battery costs may be reduced while battery performance is improved.

As an example embodiment, though the separator has a very thin inorganic particle layer so that the average thickness of the porous substrate is 15 um or less and the thickness of the porous substrate is 0.7 times or more of the entire thickness of the separator, it may have excellent mechanical properties, electrical properties, and thermal properties described later. Manufacture of the separator having the above properties may be achieved by adjusting any one or more selected from the thickness of each layer, the size of inorganic particles, the type of binder, the surface of inorganic particles, and the saturated moisture content of the separator, but the means is not particularly limited as long as it is achieved.

That is, conventionally, when a separator is manufactured at a very small thickness as described above, a separator satisfying all of the physical properties as described above may be provided. However, the inventors of the present disclosure repeated the research, and as a result, confirmed that a separator which has excellent heat resistance and adhesion even at a small thickness and excellent mechanical strength and permeability by implementing the Gurley permeability, the puncture strength, the tensile strength, and the saturated moisture content in the ranges described above simultaneously may be provided.

As an example embodiment, the separator having the physical properties as described above with the saturated moisture content may be manufactured using the inorganic particles having a certain specific surface area. For example, the separator according to an example embodiment may have a BET specific surface area of the inorganic particles comprised of 3 m²/g or more, 4 m²/g or more and 7 m²/g or less, 6 m²/g or less, or a value between the numerical values, and specifically, 3 to 7 m²/g or 4 to 6 m²/g.

As an example embodiment, the separator having the physical properties as described above may be manufactured by adjusting a thickness ratio of the porous substrate and the inorganic particle layer comprised to a specific value. For example, the ratio between the average thickness of the porous substrate and an average thickness of the separator may be 0.7 or more, 0.75 or more, 0.77 or more and 0.99 or less, 0.9 or less, 0.85 or less, or a value between the numerical values, and specifically, 0.7 to 0.99, 0.75 to 0.9, or 0.77 to 0.85.

As an example embodiment, the separator having the physical properties as described above may be manufactured using the binder comprised in the separator as a specific resin. For example, the binder may comprise a polyacrylamide-based resin, and specifically, for example, a polyacrylamide-based resin comprising a structural unit derived from a (meth)acrylamide-based monomer and a structural unit derived from a (meth)acryl-based monomer containing a hydroxyl group.

According to an example embodiment, the separator having the physical properties as described above may be manufactured by using a specific water-based polymer with the polyacrylamide-based resin described above as a binder. For example, the specific water-based polymer may be any one or two or more selected from the group consisting of polyvinyl alcohol (PVA), polyvinylidene fluoride (PVDF), carboxymethyl cellulose (CMC), styrene-butadiene rubber (SBR), polyacrylic acid (PAA), polyethylene glycol (PEG), polyacrylonitrile (PAN), polyvinylpyrrolidone (PVP), and copolymers thereof.

In an example embodimetns, the binder may have a glass transition temperature (Tg) to lie in a range of 0 to 200 °C, preferably 0 to 150 °C, 30 to 200 °C, 30 to 150 °C, 50 to 150 °C.

According to another example embodiment, the separator having the physical properties as described above may be manufactured by using the polyacrylamide-based resin described above as the binder and using the porous substrate comprising a polar functional group on the surface. A non-limiting example of the polar functional group may comprise a carboxyl group, an aldehyde group, a hydroxyl group, and the like, but is not particularly limited. The polar functional group may be, according to an example, introduced by a hydrophilic surface treatment, and the hydrophilic surface treatment may be performed by comprising, according to an example, one or more of a corona discharge treatment and a plasma discharge treatment.

Hereinafter, the separator will be described in more detail.

In an example embodiment, the Gurley permeability of the separator may be 250 sec/100 cc or less, 230 sec/100 cc or less, 200 sec/100 cc or less, 180 sec/100 cc or less, 10 sec/100 cc or more, 50 sec/100 cc or more, 90 sec/100 cc or more, 100 sec/100 cc or more, or a value between the numerical values. Specifically, the Gurley permeability may be 10 to 250 sec/100 cc, 50 to 200 sec/100 cc, 90 to 230 sec/100 cc, or 100 to 180 sec/100 cc. Since the gas Gurley permeability range described above is satisfied, ion conductivity may be excellent, and charge and discharge characteristics of the electrochemical device may be improved due to low internal resistance of the electrochemical device. The Gurley permeability may be measured according to the standard of ASTM D726.

In an example embodiment, the puncture strength of the separator may be 0.3 N/µm or more, 0.32 N/um or more, 0.35 N/um or more and 1.0 N/um or less, 0.8 N/µm or less, 0.5 N/µm or less, or a value between the numerical values. Specifically, the puncture strength may be 0.3 to 1.0 N/µm, 0.32 to 0.8 N/pm, or 0.35 N/um to 0.5 N/um.

In an example embodiment, the separator may have a tensile strength in the machine direction (MD) of 1500 to 2500 kgf/cm² or 1500 to 2000 kgf/cm².

In an example embodiment, the separator may have a tensile strength in the transverse direction (TD) of 1500 kgf/cm² or more, 1600 kgf/cm² or more, 1700 kgf/cm² or more and 2500 kgf/cm² or less, 2000 kgf/cm² or less, or a value between the numerical values. Specifically, the tensile strength in the transverse direction may be 1500 to 2500 kgf/cm², 1600 to 2000 kgf/cm², or 1700 to 2000 kgf/cm². The tensile strength n MD and in TD may be measured in accordance with ASTM D882.

Since the puncture strength and the tensile strength in the ranges described above are satisfied, resistance to external stress occurring during manufacture of an electrochemical device and a dendrite occurring during charge and discharge of an electrochemical device is excellent, and safety of the electrochemical device may be secured.

The separator according to an example embodiment may have excellent heat resistance even at a small thickness. In an example embodiment, a heat shrinkage rate of the separator in the machine direction and in the transverse direction measured after being allowed to stand at 130°C for 60 minutes may be 5% or less, 4% or less, 3% or less, 2% or less, or 1.5% or less. The shrinkage rates in the machine direction (MD) and in the transverse direction (TD) at the indicated conditions (130°C for 60 minutes) may be calculated using the following equations: MD Heat shrinkage rate (%) = (length in MD before heating - length in MD after heating)/ length in MD before heating × 100; TD Heat shrinkage rate (%) = (length in TD before heating - length in TD after heating)/ length in TD before heating × 100.

In an example embodiment, the saturated moisture content is measured after allowing the separator in a thermo-hygrostat set to 40°C and a relative humidity of 90% for 24 hours, and may be 350 ppm or more, 450 ppm or more, 500 ppm or more, 550 ppm or more, 600 ppm or more and 1000 ppm or less, 900 ppm or less, 800 ppm or less, 750 ppm or less, or a value between the numerical values. Specifically, the saturated moisture content may be 350 to 1000 ppm, 450 to 1000 ppm, 500 to 900 ppm, 550 to 800 ppm, or 600 to 750 ppm.

In an example embodiment, the porous substrate may have an average thickness of 5 to 15 um, and a ratio between the average thickness of the porous substrate and an average thickness of the separator may be 0.7 or more. The separator according to an example embodiment may implement the Gurley permeability, the puncture strength, the tensile strength, and the saturated moisture content in the ranges described above even under the thickness conditions described above simultaneously. Accordingly, a separator for a secondary battery may be thinned, and is appropriate for being applied to a high capacity/high output battery.

In an example embodiment, the average thickness of the porous substrate is not necessarily limited thereto, but may be 5 um or more, 8 um or more and 15 µm or less, 12 µm or less, or a value between the numerical values. Specifically, the average thickness of the porous substrate may be 5 to 15 um or 8 to 12 um.

In an example embodiment, a ratio between the average thickness of the porous substrate and the average thickness of the separator may be 0.7 or more, 0.75 or more, 0.77 or more and 0.99 or less, 0.9 or less, 0.85 or less, or a value between the numerical values. Specifically, a ratio between the average thickness of the porous substrate and the average thickness of the separator may be 0.7 to 0.99, 0.75 to 0.9, or 0.77 to 0.85.

In an example embodiment, the average thickness of the separator is not necessarily limited thereto, but may be 7 um or more, 10 um or more, 12 um or more and 20 µm or less, 15 um or less, or a value between the numerical values. Specifically, the average thickness of the separator may be 7 to 20 µm, 10 to 15 um, or 12 to 15 um.

In an example embodiment, the inorganic particle layer may be coated on one or both surfaces of the porous substrate, and when both surfaces of the porous substrate are coated with the inorganic particle layer, the thicknesses of the inorganic particle layers coated on one surface and the other surface may be the same as or different from each other.

In an example embodiment, the total thickness of the inorganic particle layer formed on the porous substrate is not necessarily limited thereto, but may be 4 µm or less, 3.5 um or less and 1 um or more, 1.5 um or more, or a value between the numerical values. Specifically, the total thickness of the inorganic particle layer may be 3.2 µm or less. More specifically, the total thickness of the inorganic particle layer may be 1 to 4 µm, 1.5 to 3.5 µm, 1 to 3.2 um, or 1.5 to 3.2 um.

In an example embodiment, the binder may comprise a polyacrylamide-based resin.

In an example embodiment, the polyacrylamide-based resin may be polyacrylamide or a copolymer comprising the same. In an example embodiment, the copolymer may be a block copolymer or a random copolymer, but the copolymer described in the present disclosure refers to a random copolymer which is polymerized by mixing two or more monomers together.

In an example embodiment, the polyacrylamide-based resin may be a copolymer comprising a unit derived from a (meth)acrylamide-based monomer and a unit derived from a comonomer. Specifically, the polyacrylamide-based resin may comprise a structural unit derived from the (meth)acrylamide-based monomer and a structural unit derived from a (meth)acryl-based monomer containing a hydroxyl group.

Since the separator according to an example embodiment comprises the above copolymer rather than a homopolymer derived from an acrylamide-based monomer, mechanical strength, gas permeability, heat resistance, and adhesion may be further improved. In addition, since the electrochemical device comprises the separator, it may have better resistance properties and heat stability.

The unit derived from the (meth)acrylamide-based monomer of the polyacrylamide-based resin may be represented by the following Chemical Formula 1: 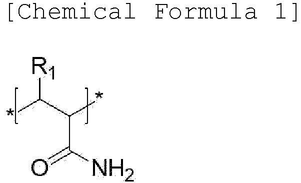 wherein R₁ is hydrogen or a C1 to C6 alkyl group.

The unit derived from the hydroxyl group-containing (meth)acryl-based monomer of the polyacrylamide-based resin may be represented by the following Chemical Formula 2: 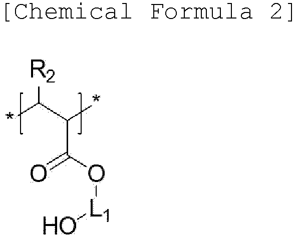 wherein R₂ is hydrogen or a C1 to C6 alkyl group. In addition, L₁ is a linear or branched C1 to C6 alkylene group.

In the polyacrylamide-based resin according to an example embodiment the (meth)acrylamide-based monomer may be comprised at 65 to 98 mol%, 70 to 97 mol%, or 75 to 95 mol%. The (meth)acryl-based monomer containing a hydroxyl group may be comprised at 2 to 35 mol%, 3 to 30 mol%, or 5 to 25 mol%. When the polyacrylamide-based resin is prepared within the content range, sufficient adhesive strength may be obtained, and a more significant effect may be obtained at a shrinkage rate at a high temperature.

In an example embodiment, the polyacrylamide-based resin may have a weight average molecular weight in terms of polyethylene glycol of 100,000 g/mol or more, 200,000 g/mol or more and 2,000,000 g/mol or less, 1,000,000 g/mol or less, 500,000 g/mol or less, or a value between the numerical values as measured using gel permeation chromatography. Specifically, the polyacrylamide-based resin may have a weight average molecular weight of 100,000 to 2,000,000 g/mol, 200,000 to 1,000,000 g/mol, or 200,000 to 500,000 g/mol. According to an example embodiment, when the weight average molecular weight of the polyacrylamide-based resin satisfies the above range, heat resistance and adhesion may be further improved.

The viscosity of an aqueous solution of the polyacrylamide-based resin having a solid content of 10 wt% may be 3000 cps or less, 2500 cps or less, 2000 cps or less, or 1500 cps or less, but is not limited thereto. When a coating slurry is prepared by mixing with the inorganic particles within the range, the viscosity of the slurry may be further lowered and coatability may be further improved, which is thus preferred.

The preparation method is not particularly limited as long as the polyacrylamide-based resin according to the example embodiment described above may be provided, but in an example embodiment, the polyacrylamide-based resin may be prepared by various known preparation methods such as emulsion polymerization, suspension polymerization, bulk polymerization, and solution polymerization.

In an example embodiment, the polyacrylamide-based resin may be obtained by copolymerizing a mixture comprising the monomer components described above; and a polymerization initiator.

In an example embodiment, the type of polymerization initiator is not particularly limited as long as the copolymer may be obtained, but in an example embodiment, the polymerization initiator may be an azo-based initiator, a peroxide-based initiator, or a persulfate-based polymerization initiator such as potassium persulfate, sodium persulfate, or ammonium persulfate.

According to an example embodiment, the polyacrylamide-based resin may be obtained by heating to 50 to 90°C or 60 to 80°C, and then adding a polymerization initiator to perform a polymerization reaction.

In an example embodiment, after the polymerization reaction is completed, the temperature is lowered to room temperature (20±5°C) and a basic solution and the like are added to prepare a polyacrylamide-based resin adjusted to a neutral state.

In an example embodiment, the binder may further comprise any one or two or more water-based polymers selected from the group consisting of polyvinyl alcohol (PVA), polyvinylidene fluoride (PVDF), carboxymethyl cellulose (CMC), styrene-butadiene rubber (SBR), polyacrylic acid (PAA), polyethylene glycol (PEG), polyacrylonitrile (PAN), polyvinylpyrrolidone (PVP), copolymers thereof.

Since the separator according to an example embodiment uses the water-based polymer described above with the polyacrylamide-based resin as a binder, mechanical strength, gas permeability, heat resistance, and adhesion may be further improved. In addition, since improvement of the physical properties as described above may be achieved without pretreatment such as corona discharge treatment on the porous substrate, time and material costs may be reduced in terms of process.

In an example embodiment, a content of the water-based polymer may be 0.1 wt% or more, 1 wt% or more, 5 wt% or more and 30 wt% or less, 20 wt% or less, or 15 wt% or less of the total content of the binder. Otherwise, the content may be a value between the numerical values. Specifically, the content of the water-based polymer may be 0.1 to 30 wt%, 1 to 20 wt%, or 5 to 15 wt%, but is not necessarily limited thereto.

In an example embodiment, the water-based polymer may have a degree of saponification of 80 to 95 mol%, specifically 85 to 90 mol%, but is not particularly limited thereto.

In an example embodiment, the water-based polymer may have a weight average molecular weight of 10,000 to 100,000 g/mol, specifically 30,000 to 70,000 g/mol, but is not particularly limited thereto.

In an example embodiment, the porous substrate may be a polyolefin-based porous substrate such as polyethylene, polypropylene, or copolymers thereof, but is not thereto, and all porous substrates known as a porous substrate of a separator of an electrochemical device may be used. In an example embodiment, the porous substrate may be manufactured into a film or sheet, but is not particularly limited.

In an example embodiment, the porous substrate may have a porosity of 20 to 60%, specifically 30 to 60%, but is not limited thereto.

In an example embodiment, the inorganic particle layer may comprise a binder and inorganic particles, and may be a porous inorganic particle layer in which the inorganic particles are connected and fixed by the binder to form pores. In an example embodiment, the inorganic particle layer is provided on at least one surface of the porous substrate, may occupy an area fraction of 60% or more, 70% or more, 80% or more, or 90% or more, based on an overall surface of the porous substrate, and preferably, may be formed on the area of the porous substrate of 100%.

As an example embodiment, the inorganic particles are not limited as long as they are inorganic particles used in the art. As a non-limiting example, the inorganic particle particles may comprise any one or two or more selected from the group consisting of metal hydroxides, metal oxides, metal nitrides, and metal carbides. For example, the inorganic particles may comprise any one or two or more selected from the group consisting of magnesium oxide (MgO), magnesium hydroxide (Mg(OH)₂), alumina (Al₂O₃), boehmite (γ-AlO(OH)), aluminum hydroxide (Al(OH)₃), silica (SiO₂), silicon carbide (SiC), calcium oxide (CaO), titanium dioxide (TiO₂), strontium titanate (SrTiO₃), zinc oxide (ZnO), yttrium oxide (Y₂O₃), zirconium oxide (ZrO₂), tin oxide (SnO₂), and cerium oxide (CeO₂). In terms of battery stability, the inorganic particles may be, specifically, for example, any one or two or more metal hydroxide particles selected from the group consisting of boehmite, aluminum hydroxide (Al(OH)₃), and magnesium hydroxide (Mg(OH)₂).

In an example embodiment, the shape of the inorganic particles is not limited, and may be spherical, oval, needle-shaped, and the like.

In an example embodiment, the inorganic particles may have a BET specific surface area of 3 m²/g or more, 4 m²/g or more and 7 m²/g or less, 6 m²/g or less, or a value between the numerical values. Specifically, the inorganic particles may have the BET specific surface area of 3 to 7 m²/g or 4 to 6 m²/g. The present disclosure may provide a separator satisfying the physical properties to be implemented in the present disclosure simultaneously, when the specific surface area in the above described range is satisfied. Herein, the BET specific surface area of the inorganic particles may be measured by the method of ASTM C1069.

In an example embodiment, the inorganic particles may have an average particle diameter (D50) of 0.5 um or more, 0.6 um or more and 1.5 µm or less, 1.0 um or less, or a value between the numerical values. Specifically, the inorganic particles may have the D50 of 0.5 to 1.5 µm or 0.6 to 1.0 um, but it may be changed as long as it is not out of the range of the present disclosure.

In an example embodiment, the inorganic particles may have an average particle diameter (D10) of 0.2 to 0.7 µm, 0.25 to 0.7 µm, 0.3 to 0.7 µm, 0.35 to 0.7 um, or 0.35 to 0.6 um.

In an example embodiment, the inorganic particles may have an average particle diameter (D90) of 1.3 to 3.0 µm, 1.3 to 2.5 µm, 1.3 to 2.2 µm, 1.5 to 2.5 µm, 1.5 to 2.2 um.

In an example embodiment, the inorganic particle layer may have a weight ratio between the inorganic particles and the binder of 50:50 to 99.9:0.1, 60:40 to 98:2, or 80:20 to 98:2, but is not particularly limited thereto.

In an example embodiment, the inorganic particle layer may be formed at 0.5 to 10 g/m², specifically 1 to 5 g/m², and more specifically 2.5 to 4 g/m², but is not particularly limited thereto.

Hereinafter, a method for manufacturing a separator of the present disclosure will be described.

The method for manufacturing the separator satisfying the physical properties described above simultaneously may comprise: a first step of preparing a coating slurry comprising a binder and inorganic particles; and a second step of applying the coating slurry on at least one surface of a porous substrate to form an inorganic particle layer.

Since the description of each of the porous substrate, the inorganic particle layer, the inorganic particles, and the binder is as described above, detailed description will be omitted.

Any common method known in the art may be applied without limitation to the method for preparing a coating slurry in the first step, and though it is not particularly limited, according to a non-limiting example, the inorganic particles may be dispersed by stirring to prepare a slurry, and agglomerated inorganic particles may be dispersed using a ball mill.

The coating slurry comprises inorganic particles, a binder, and a solvent, and the solvent may be water, lower alcohols such as ethanol, methanol, and propanol, solvents such as dimethylformamide, acetone, tetrahydrofuran, diethyl ether, methylene chloride, DMF, N-ethyl-2-pyrrolidone, hexane, and cyclohexane, or a mixture thereof, but is not necessarily limited thereto.

In an example embodiment, a solid content of the coating slurry is not particularly limited, but for example, may be 1 to 50 wt%, 5 to 30 wt%, or 10 to 30 wt%, but is not limited thereto.

In an example embodiment, the coating slurry may comprise 50 to 99.9 wt% of the inorganic particles and 0.1 to 50 wt% of the binder, and specifically, 60 to 98 wt% of the inorganic particles and 2 to 40 wt% of the binder, and more specifically, 80 to 98 wt% of the inorganic particles and 2 to 20 wt% of the binder, based on the total weight of the solid content, but is not limited thereto.

Any common method known in the art may be applied to the method for applying the coating slurry in the second step without limitation, and according to a non-limiting example, roll coating, spin coating, dip coating, bar coating, die coating, slit coating, inkjet printing, and a combination of these methods may be applied. The applied slurry may be dried and formed into an inorganic particle layer. Drying for forming the inorganic particle layer is not particularly limited, but may be performed at 100°C or lower or 30 to 60°C.

In a specific example embodiment, after performing drying for forming the inorganic particle layer, a process of aging the porous substrate having the inorganic particle layer formed thereon may not be further comprised. The aging may be performed at 50 to 150°C or 60 to 120°C, and an aging time may be 2 hours to 24 hours or 10 to 20 hours. More specifically, the aging may be performed in a temperature range of 70 to 120°C for 10 to 15 hours. According to an example embodiment, since a separator satisfying the physical properties as described above simultaneously may be manufactured without performing the aging process, time and material costs in terms of process may be reduced.

The present disclosure may provide an electrochemical device comprising the separator according to an example embodiment of the example embodiments described above. Since the electrochemical device comprises the separator as described above, electrical resistance is reduced, and thus, the electrochemical device may have significantly excellent life characteristics and excellent thermal stability at a high temperature.

The electrochemical device may be any known energy storage device, and though it is not particularly limited, as a non-limiting example, may be a secondary battery or lithium secondary battery. Since the lithium secondary battery is well known and its configuration is also known, it will not described in detail in the present disclosure.

The lithium secondary battery according to an example embodiment may comprise the separator described above between a positive electrode and a negative electrode. Herein, the positive electrode and the negative electrode may be used without limitation as long as they are commonly used in the lithium secondary battery.

When the separator according to an example embodiment is commonly used in a battery, the manufacturing method follows a common manufacturing method in which a negative electrode, a separator, and a positive electrode are arranged and assembled, and an electrolyte solution is injected thereto to complete the manufacture, and thus, the manufacturing method will not be described any more in detail.

Hereinafter, the examples of the present disclosure will be further described with reference to the specific experimental examples. It is apparent to those skilled in the art that the examples and the comparative examples comprised in the experimental examples only illustrate the present disclosure and do not limit the appended claims, and various modifications and alterations of the examples may be made within the range of the scope and spirit of the present disclosure, and these modifications and alterations will fall within the appended claims.

First, methods for measuring physical properties of a separator and a method for evaluating characteristics of a secondary battery will be described.

### [Average thickness (µm) of separator and porous substrate]

The average thickness of the separator was determined by the following method. A separator was made 10 times and the 10 separators were stacked on top of each other forming a 10-layer structure. The thickness of the 10-layer structure (also referred to as a 10-layer separator) was measured at 5 different points in the transverse direction randomly selected using a thickness meter available from Mitutoyo. The measured thicknesses at the 5 points were added and divided by 5 to derive an average thickness of the 10-layer structure, and that value was divided by 10 to derive an overall average thickness of a single separator.

The average thickness of the porous substrate was determined by the following method. Before forming the inorganic particle layer, only porous substrates having no inorganic particle layer formed were overlapped in 10 layers, each thickness was measured at 5 random points in the transverse direction with a thickness meter available from Mitutoyo, the thicknesses were divided by 5 to derive an average thickness of the 10 layer separator, and the value was divided by 10 again to derive an average thickness of the porous substrate. After forming the inorganic particle layer, the inorganic particle layer was detached, then drying was performed sufficiently, and an average thickness of the porous substrate from which the inorganic particle layer was detached was derived as described above. The detaching of the inorganic layer may be performed by any suitable means, and it is not limited to any particular method.

### [Coating amount (g/m²)]

A coating amount was calculated by measuring a weight (g) per unit area (m²) of the separator before and after coating. Specifically, first, before coating, the substrate was cut into a size of 10 cm in width and length and weighed, and the weight was multiplied by 100 to convert it into a weight per m². Then, the separator after coating was cut into the same size and weighed, and the weighy was multiplied by 100 to convert it into a weight in m², from which the weighy in g/m² of the substrate was subtracted to determine the coating amount of only the coating layer.

### [Weight average molecular weight (g/mol)]

Measurement of the weight average molecular weight was performed by using GPC (EcoSEC HLC-8320 GPC Refractive Index detector from Tosoh Corporation) using TSKgel guard PWx, two columns of TSKgel GMPWxl and TSKgel G2500PWxl (7.8×300 mm) as a GPC column, a 0.1 M aqueous NaNO₃ solution as a developing solvent, and polyethylene glycol as a standard, and performing analysis at 40°C at a flow rate of 1 mL/min.

### [Gurley permeability (sec/100 cc)]

Teh Gurley permeability was measured according to the ASTM standard D726, using a Densometer available from Toyoseiki. A time it took for 100 cc of air to pass a separator having an area of 1 in² was recorded in seconds and compared.

### [Puncture strength (N/um)]

The puncture strength was measured by attaching a pin tip having a diameter of 1.0 mm and a radius of curvature of 0.5 mm to Universal Test Machine (UTM) 3345 available from INSTRON and pressing the separator at a speed of 120 mm/min. The load (N) when the separator was broken was divided by the thickness (µm) of the separator to calculate the puncture strength.

### [Tensile strength (kgf/cm²)]

The tensile strength was measured as a strength when a separator was broken by pulling the separator in the transverse direction and in the machine direction, respectively at a speed of 100 mm/min using a Universal Test Machine (UTM) 3345 available from INSTRON in accordance with ASTM D882.

### [Heat shrinkage rate (%)]

A separator was cut into a square shape with a side of 10 cm and a transverse direction (TD) and a machine direction (MD) were indicated. A sample was placed in the center, 5 sheets of paper were placed on and under the sample, respectively, and the four sides of the paper were wrapped with tape. The sample wrapped in paper was allowed to stand in a hot air drying oven at 130 °C for 60 minutes. Thereafter, the sample was taken out, the separator was measured with a camera, and shrinkage rates in the machine direction (MD) and in the transverse direction (TD) were calculated using the following equations: MD Heat shrinkage rate (%) = (length in MD before heating - length in MD after heating)/ length in MD before heating × 100 TD Heat shrinkage rate (%) = (length in TD before heating - length in TD after heating)/ length in TD before heating × 100

### [Saturated moisture content (ppm)]

For measuting the saturated moisture content of the separator, a Karl Fischer method was used. A Karl Fischer titrator available from Metrohm was used as measuring equipment, and measuring conditions were a separator sample weight of 0.3 g, an oven temperature of 150°C, and a measurement time of 600 seconds.

Specifically, the manufactured separator was left in a thermo-hygrostat set to 40°C and a relative humidity of 90%, and then the saturated moisture content was measured under the conditions described above.

### [Adhesive strength]

A separator was cut into a size of 50 mm wide×50 mm long and placed so that the inorganic particle layer was on top. A piece of black drawing paper (20 mm wide× 150 mm long× 0.25 mm thick) having a coefficient of dynamic fraction of 0.15 was placed thereon, a pressing device was used to apply a certain pressure (200 g/cm²), the black drawing paper was forcibly pulled to the side, and a degree of inorganic substance adhered on the surface was confirmed and determined as A/B/C/D/F depending on the adhesion degree, referring to the following grade:
A: no adhesion
B: inorganic substance adhered in a small amount

In C-F, the binder and the inorganic substance were adhered together and the degree was severe toward F.

### [Resistance properties of battery]

Each battery manufactured according to the examples and the comparative examples was charged at a constant current-constant voltage (CC-CV) of 4.2 V using a charge/discharge cycle device, and then was discharged. Specifically, each battery was charged at constant current with a 0.5 C rate at 25°C until the voltage reached 4.2 V, and charged at constant voltage until the current was 0.01 C while maintaining 4.2 V. Subsequently, a cycle of discharging at a constant current of 0.5 C until the voltage reached 3.0 V during discharging was repeated 600 times. When a state of charge (SoC) at the 600th charge/discharge cycle was 60%, direct current internal resistance (DC-IR) was measured during discharging by a J-pulse method to derive a resistance value.

At this time, when an increase in resistance of each battery manufactured according to the examples and the comparative examples was less than 5% based on the resistance value of Example 1, it was marked as "low", when the increase was 5% or more, it was marked as "middle", and when the increase was 10% or more, it was marked as "high".

### <Preparation Example 1>

The inside of a 1.0 L flask was replaced with nitrogen, a monomer component of 932 mmol of acrylamide, 89 mmol of 2-hydroxymethylmethacrylate, and 700 g of distilled water were added to the flask, and heated to 75°C. Thereafter, 0.789 mmol of ammonium persulfate as a polymerization initiator was further added to the flask, the flask was closed, and a polymerization reaction of the mixture proceeded. After proceeding with the polymerization reaction for 12 hours, the closed flask was opened to the air to lower the temperature to room temperature, a 1M sodium hydroxide solution was added to adjust the pH to 7, thereby preparing a polyacrylamide-based resin aqueous solution. At this time, the weight average molecular weight of the prepared polyacrylamide-based resin was 300,000 g/mol.

### <Preparation Example 2>

A polyacrylamide-based resin aqueous solution was prepared in the same manner as in Preparation Example 1, except that 1055 mmol of acrylamide was used alone as a monomer component. At this time, the weight average molecular weight of the prepared polyacrylamide-based resin was 280,000 g/mol.

### <Example 1>

### (Preparation of coating slurry)

96.5 wt% of boehmite (D10: 0.45 um, D50: 0.71 µm, D90: 1.57 um, BET specific surface area: 5 m²/g) as inorganic particles, and 3.0 wt% of the polyacrylamide-based resin of Preparation Example 1 and 0.5 wt% of polyvinyl alcohol (degree of saponification: 88 mol%, Mw: 50,000 g/mol) as a binder were added to water, and then stirring was performed to prepare a coating slurry having a solid content concentration of 28 wt%.

### Manufacture of separator

A polyethylene porous film (porosity: 42%, Gurley permeability: 128 sec/100 cc, tensile strength in MD: 2,317 kgf/cm², tensile strength in TD: 2,514 kgf/cm²) having an average thickness of 10 um was used as a porous substrate. The coating slurry prepared above was applied by coating on both surfaces of the porous substrate and then dried, thereby manufacturing a separator having an inorganic particle layer having an average thickness of 1.35 um formed on both surfaces, respectively, of the porous substrate. The physical properties of the separators are listed in the following Table 1.

### Manufacture of secondary battery:

94 wt% of LiCoO₂ as a positive electrode active material, 2.5 wt% of polyvinylidene fluoride as a fusing agent, and 3.5 wt% of carbon black as a conductive agent were added to N-methyl-2-pyrrolidone (NMP) as a solvent, and stirring was performed to prepare a uniform positive electrode slurry. The slurry prepared above was coated on an aluminum foil having a thickness of 30 µm, dried, and pressed to manufacture a positive electrode having a total thickness of 150 µm. 95 wt% of artificial graphite as a negative electrode active material, 3 wt% of acryl-based latex having Tg of -52°C as a fusing agent, and 2 wt% of carboxymethyl cellulose (CMC) as a thickener were added to water as a solvent, and stirring was performed to prepare a uniform negative electrode slurry. The slurry prepared above was coated on a copper foil having a thickness of 20 µm, dried, and pressed to manufacture a negative electrode having a total thickness of 150 um. A pouch type battery was assembled by stacking the separator manufactured above between the positive electrode and the negative electrode, and in order to fuse the positive electrode, the negative electrode, and the separator together, the assembled battery was heat-fused at 80°C, 1 MPa with a heat press machine. Thereafter, an electrolyte in which 1 M lithium hexafluorophosphate (LiPF₆) was dissolved in a solution comprising ethylene carbonate (EC), ethyl methyl carbonate (EMC), and dimethyl carbonate (DMC) at a volume ratio of 30:50:20 was injected, and the battery was sealed to manufacture a secondary battery having a capacity of 2 Ah. The resistance properties of the secondary battery are listed in the following Table 1.

### <Example 2>

A separator and a secondary battery were manufactured in the same manner as in Example 1, except that 3.5 wt% of the polyacrylamide-based resin of Preparation Example 1 was used as the binder, without further using polyvinyl alcohol, and the porous substrate which was pretreated by the following method was used. The characteristics of the separator and the secondary battery are listed in the following Table 1.

The pretreated porous substrate was manufactured by treating both surfaces of a polyethylene porous film (porosity: 42%, Gurley permeability: 128 sec/100 cc, tensile strength in MD: 2,317 kgf/cm², tensile strength in TD: 2,514 kgf/cm²) having an average thickness of 10 um with corona discharge. At this time, the corona discharge treatment was performed at a power density of 2 W/mm and a rate of 3 to 20 mpm (meter per minute).

### <Example 3>

A separator and a secondary battery were manufactured in the same manner as in Example 1, by using the same type as the components comprised in the coating slurry, except that the contents were changed to 96.8 wt% of boehmite, 3.0 wt% of the polyacrylamide-based resin of Preparation Example 1, and 0.2 wt% of polyvinyl alcohol, and the porous substrate was changed to a polyethylene porous film (porosity: 42%, Gurley permeability: 109 sec/100 cc, tensile strength in MD: 2,055 kgf/cm², tensile strength in TD: 2,177 kgf/cm²) having an average thickness of 10 um. The characteristics of the separator and the secondary battery are listed in the following Table 1.

### <Example 4>

A separator and a secondary battery were manufactured in the same manner as in Example 2, except that a polyethylene porous film (porosity: 42%, Gurley permeability: 109 sec/100 cc, tensile strength in MD: 2,055 kgf/cm², tensile strength in TD: 2,177 kgf/cm²) having an average thickness of 10 um was treated with corona discharge and used as the porous substrate. The characteristics of the separator and the secondary battery are listed in the following Table 1.

### <Example 5>

A separator and a secondary battery were manufactured in the same manner as in Example 1, except that when the coating slurry was prepared, boehmite (D10: 0.56 um, D50: 0.85 µm, D90: 1.93 um, BET specific surface area: 4 m²/g) was used as the inorganic particles. The characteristics of the separator and the secondary battery are listed in the following Table 1.

### <Example 6>

A separator and a secondary battery were manufactured in the same manner as in Example 1, except that when the coating slurry was prepared, boehmite (D10: 0.38 µm, D50: 0.67 µm, D90: 1.52 um, BET specific surface area: 6 m²/g) was used as the inorganic particles. The characteristics of the separator and the secondary battery are listed in the following Table 1.

### <Example 7>

A separator and a secondary battery were manufactured in the same manner as in Example 1, except that the polyacrylamide-based resin of Preparation Example 2 was used instead of the polyacrylamide-based resin of Preparation Example 1. The characteristics of the separator and the secondary battery are listed in the following Table 1.

### <Comparative Example 1>

A separator and a secondary battery were manufactured in the same manner as in Example 1, except that a coating slurry having a solid content concentration of 28 wt% prepared by adding 93.0 wt% of boehmite (D10: 0.45 um, D50: 0.71 µm, D90: 1.57 um, BET specific surface area: 5 m²/g) as the inorganic particles and 7.0 wt% of a water-dispersed acrylic resin having a latex content of 20 wt% (glass transition temperature: -42°C) as the binder to water and performing stirring was used instead of the coating slurry prepared in Example 1. The characteristics of the separator and the secondary battery are listed in the following Table 2.

### <Comparative Example 2>

A separator and a secondary battery were manufactured in the same manner as in Example 2, except that when the separator was manufactured, the inorganic particle layer was formed at an average thickness of 2 um on both surfaces of a polyethylene porous film (porosity: 40%, Gurley permeability: 152 sec/100 cc, tensile strength in MD: 2,242 kgf/cm², tensile strength in TD: 1,864 kgf/cm²) having an average thickness of 9 um, respectively. The characteristics of the separator and the secondary battery are listed in the following Table 2.

### <Comparative Example 3>

A separator and a secondary battery were manufactured in the same manner as in Example 2, except that when the coating slurry was prepared, boehmite (D10: 0.16 um, D50: 0.31 µm, D90: 0.75 um, BET specific surface area: 20 m²/g) was used as the inorganic particles. The characteristics of the separator and the secondary battery are listed in the following Table 2.

### <Comparative Example 4>

A separator and a secondary battery were manufactured in the same manner as in Example 2, except that when the coating slurry was prepared, boehmite (D10: 0.79 µm, D50: 1.64 µm, D90: 2.85 um, BET specific surface area: 2.5 m²/g) was used as the inorganic particles. The characteristics of the separator and the secondary battery are listed in the following Table 2.

### <Comparative Example 5>

A separator and a secondary battery were manufactured in the same manner as in Example 2, except that when the coating slurry was prepared, boehmite (D10: 0.31 um, D50: 0.58 µm, D90: 1.28 um, BET specific surface area: 8 m²/g) was used as the inorganic particles. The characteristics of the separator and the secondary battery are listed in the following Table 2.

**[Table 1]**

| | Unit | Example 1 | Example 2 | Example 3 | Example 4 | Example 5 | Example 6 | Example 7 |
|---|---|---|---|---|---|---|---|---|
| Average thickness of porous substrate (t₁) | µm | 10 | 10 | 10.3 | 10.1 | 10 | 10 | 10 |
| Average thickness of separator (t₂) | µm | 12.7 | 12.6 | 12.9 | 13.0 | 12.6 | 12.7 | 12.7 |
| t₁/t₂ | - | 0.79 | 0.79 | 0.80 | 0.78 | 0.79 | 0.79 | 079 |
| Coating amount | g/m² | 3.2 | 3.2 | 3.7 | 3.8 | 3.2 | 3.3 | 3.2 |
| Gurley permeability | Sec/100 cc | 163 | 175 | 141 | 148 | 160 | 162 | 172 |
| Puncture strength | N/µm | 0.373 | 0.335 | 0.356 | 0.321 | 0.368 | 0.332 | 0.334 |
| Tensile strength in MD | kgf/cm² | 1753 | 1620 | 1559 | 1539 | 1745 | 1739 | 1630 |
| Tensile strength in TD | kgf/cm² | 1927 | 1725 | 1776 | 1678 | 1911 | 1920 | 1750 |
| Saturated moisture content | ppm | 630 | 672 | 650 | 708 | 600 | 670 | 650 |
| Heat shrinkage rate in MD | % | 1.3 | 3.6 | 1.4 | 1.5 | 1.4 | 1.4 | 4.8 |
| Heat shrinkage of TD | % | 1.1 | 2.9 | 0.9 | 1.2 | 1.2 | 1.1 | 4.5 |
| Adhesive strength | - | A | A | A | A | A | A | A |
| Resistance properties of secondary battery | - | Standar d | low | low | low | low | low | low |

**[Table 2]**

| | Unit | Comparative Example 1 | Comparative Example 2 | Comparative Example 3 | Comparative Example 4 | Comparative Example 5 |
|---|---|---|---|---|---|---|
| Average thickness of porous substrate (t₁) | µm | 10.1 | 8.9 | 10.3 | 10.1 | 10.3 |
| Average thickness of separator (t₂) | µm | 13.1 | 12.9 | 12.9 | 13.0 | 12.9 |
| t₁/t₂ | - | 0.77 | 0.69 | 0.80 | 0.78 | 0.80 |
| Coating amount | g/m² | 3.9 | 4.4 | 3.9 | 3.7 | 3.9 |
| Gurley permeability | Sec/100 cc | 147 | 173 | 158 | 139 | 145 |
| Puncture strength | N/µm | 0.362 | 0.345 | 0.357 | 0.344 | 0.358 |
| Tensile strength in MD | kgf/cm² | 1753 | 1820 | 1757 | 1739 | 1745 |
| Tensile strength in TD | kgf/cm² | 1927 | 1965 | 1876 | 1975 | 1913 |
| Saturated moisture content | ppm | 652 | 1120 | 1830 | 317 | 1070 |
| Heat shrinkage | % | 9.0 | 0.8 | 0.2 | 9.5 | 1.5 |
| rate in MD | | | | | | |
| Heat shrinkage of TD | % | 8.5 | 0.5 | 0.1 | 8.7 | 1.5 |
| Adhesive strength | - | C | A | A | D | A |
| Resistance properties of secondary battery | - | high | high | middle | high | middle |

Referring to Tables 1 and 2, the separators of Examples 1 to 7 exhibited excellent heat resistance even at a small thickness with a heat shrinkage rate of 5% or less and also exhibit excellent adhesive strength with no adhesion in the adhesive strength test, as compared with the comparative examples. In addition, it was confirmed that the discharge resistance of the battery to which the separators were applied after 600 cycles was low.

In particular, Examples 1 to 6 which used the polyacrylamide-based resin prepared by further comprising the hydroxyl group-containing (meth)acrylate-based monomer other than the (meth)acrylamide-based monomer as the binder, were confirmed to have better heat resistance than Example 7 which used the (meth)acrylamide-based monomer alone.

In addition, since Example 1 further comprised polyvinyl alcohol as the binder, it was confirmed to have better heat resistance than Example 2, even without any pretreatment on the porous substrate.

However, since the separator of Comparative Example 1 used an acrylic resin binder as the binder, it was confirmed to have significantly reduced heat resistance and adhesive strength at a small thickness. In addition, the discharge resistance of the battery to which the separator was applied after 600 cycles was confirmed to be significantly higher than Example 1.

In addition, since the separator of Comparative Example 2 had a t₁/t₂ value of less than 0.75, it did not satisfy the saturated moisture content range to be implemented in the present disclosure, and thus, the discharge resistance of the battery to which the separator was applied after 600 cycles was confirmed to be significantly higher than Example 1.

In addition, the separator of Comparative Example 3 used the inorganic particles having a BET specific surface area of 20 m²/g, and as a result, it did not satisfy the saturated moisture content range to be implemented in the present disclosure, and thus, the discharge resistance of the battery to which the separator was applied after 600 cycles was confirmed to be significantly higher than Example 1.

In addition, the separator of Comparative Example 4 used the inorganic particles having a BET specific surface area of 2.5 m²/g, and as a result, it did not satisfy the saturated moisture content range to be implemented in the present disclosure, and thus, was confirmed to have significantly reduced heat resistance and adhesive strength at a small thickness. In addition, the discharge resistance of the battery to which the separator was applied after 600 cycles was confirmed to be significantly higher than Example 1.

In addition, the separator of Comparative Example 5 used the inorganic particles having a BET specific surface area of 8 m²/g, and as a result, it did not satisfy the saturated moisture content range to be implemented in the present disclosure, and thus, the discharge resistance of the battery to which the separator was applied after 600 cycles was confirmed to be higher than Example 1.

The separator according to the embodiments of the present disclosure may have excellent heat resistance and adhesion even at a small thickness.

In addition, the inventive separator may have excellent mechanical strength and permeability even at a small thickness.

Furthermore, an electrochemical device comprising the inventive separator may exhibit excellent resistance properties and thermal safety.

The above description is provided only for example purposes to illustrate embodiments implementing the principle and technical concepts of the present disclosure. Other embodiments may be further envisioned by the skilled person after having read the present disclosure without departing from the scope of the present disclosure as defined in the appended claims. Furthermore, the embodiments may be combined to form additional embodiments.

## Claims

1. A separator comprising:
a porous substrate; and
an inorganic particle layer which is formed on at least one surface of the porous substrate and comprises a binder and inorganic particles,
wherein the separator has a Gurley permeability of 10 to 250 sec/100 cc, a puncture strength of 0.3 N/µm or more, tensile strengths in the machine direction and in the transverse direction of 1500 kgf/cm² or more, heat shrinkage rates in the machine direction and in the transverse direction measured after being allowed to stand at 130°C for 60 minutes of 5% or less, and a saturated moisture content measured by a Karl Fischer method of 350 to 1000 ppm.

2. The separator of claim 1, wherein the Gurley permeability is 90 to 230 sec/100 cc, and the saturated moisture content is 450 to 1000 ppm.

3. The separator of claim 1 or 2, wherein the porous substrate has an average thickness of 5 to 15 um, and a ratio between the average thickness of the porous substrate and an average thickness of the separator is 0.7 or more.

4. The separator of any one of claims 1 to 3, wherein a total thickness of the inorganic particle layer formed on the porous substrate is 3.2 µm or less.

5. The separator of any one of claims 1 to 4, wherein the binder comprises a polyacrylamide-based resin,
optionally, wherein the binder further comprises any one or two or more water-based polymer selected from the group consisting of polyvinyl alcohol, polyvinylidene fluoride, carboxymethyl cellulose, styrene butadiene rubber, polyacrylic acid, polyethylene glycol, polyacrylonitrile, polyvinylpyrrolidone, and copolymers thereof.

6. The separator of claim 5, wherein the polyacrylamide-based resin is a copolymer comprising a unit derived from a (meth)acrylamide-based monomer.

7. The separator of claim 6, wherein the polyacrylamide-based resin comprises a structural unit derived from the (meth)acrylamide-based monomer and a structural unit derived from a (meth)acryl-based monomer containing a hydroxyl group.

8. The separator of claim 5, wherein the polyacrylamide-based resin has a weight average molecular weight of 100,000 to 2,000,000 g/mol.

9. The separator of claim 5, wherein a content of the water-based polymer is 0.1 to 30 wt% of the total content of the binder.

10. The separator of any one of claims 1 to 9, wherein the inorganic particles have a BET specific surface area of 3 to 7 m²/g.

11. The separator of any one of claims 1 to 10, wherein the inorganic particles have an average particle diameter (D50) of 0.5 to 1.5 um,
optionally, the inorganic particles have an average particle diamether(D10) of 0.2 to 0.7 um,
optionally, the inorganic particles have an average particle diamether(D90) of 1.3 to 3.0 um.

12. The separator of any one of claims 1 to 11, wherein the inorganic particles comprise any one or two or more selected from the group consisting of metal hydroxides, metal oxides, metal nitrides, and metal carbides.

13. The separator of any one of claims 1 to 12, wherein the inorganic particle layer has a weight ratio between the inorganic particles and the binder of 50:50 to 99.9:0.1.

14. The separator of any one of claims 1 to 13, wherein the inorganic particle layer is formed to have a coating amount of 0.5 to 10 g/m².

15. An electrochemical device comprising the separator according to any one of claims 1 to 14.
